# EUROPÄISCHE PATENTSCHRIFT

(11) **EP 2 593 365 B1**
(45) Veröffentlichungstag und Bekanntmachung des Hinweises auf die Patenterteilung: **02.07.2014**
(21) Anmeldenummer: 11721718.2
(22) Anmeldetag: 18.05.2011
(51) Int. Cl.: B64F 1/36, B65G 37/02

(54) **GEPÄCKPRÜFANLAGE**
BAGGAGE SCREENING DEVICE
INSTALLATION DE CONTRÔLE DE BAGAGES

(30) Priorität: 12.07.2010 DE 102010026940
(43) Veröffentlichungstag der Anmeldung: 22.05.2013
(73) Patentinhaber: Smiths Heimann GmbH, 65205 Wiesbaden (DE)
(72) Erfinder: CRASS, Matthias, 64347 Griesheim (DE); HAAK, Sebastian, 65934 Frankfurt (DE)
(74) Vertreter: Greif, Thomas
(86) Internationale Anmeldenummer: PCT/EP2011/002457
(87) Internationale Veröffentlichungsnummer: WO 2012/007077

(56) Entgegenhaltungen:
- EP-A1- 1 151 919
- EP-A2- 0 787 668
- WO-A1-2007/090450
- DE-U1- 20 007 970
- US-A1- 2005 193 648

## Beschreibung

Die Erfindung betrifft eine Anlage zur Prüfung von Handgepäck und anderen von Personen mitgeführten Gegenständen mit einem Prüfgerät, insbesondere einem Röntgenprüfgerät, einem sich durch das Prüfgerät erstreckenden Förderer zum Fördern der zu prüfenden Gegenstände durch das Prüfgerät, einer vor dem Förderer angeordneten Auflagefläche und einer hinter dem Förderer angeordneten Entnahmestelle für die Gegenstände und mit auf den Förderer aufsetzbaren Transportwannen, in die kleine Gegenstände und Kleidungsstücke gelegt und zur Überprüfung durch das Prüfgerät gefördert werden, und mit einem Rückförderer für die Transportwannen.

Zur Sicherheitskontrolle von Handgepäck und anderen von Personen mitgeführten Gegenständen, beispielsweise zur Sicherheitskontrolle auf Flughäfen, werden bekannterweise Prüfanlagen mit Röntgenprüfgeräten verwendet, von denen die mitgeführten Gegenstände durchstrahlt werden. Die zu prüfenden Gegenstände werden auf einem Förderer, üblicherweise einem Transportband, durch das Prüfgerät gefördert, das von einem Operator bedient wird. An der Eingangsseite ist vor dem Förderer eine Auflagefläche für die zu prüfenden Gegenstände angeordnet, die üblicherweise als Rollenbahn ausgestaltet ist. Entsprechend ist an der Ausgangsseite hinter dem Prüfgerät eine Entnahmestelle angeordnet, an der die geprüften Gegenstände entnommen werden können. Bekannterweise führt eine leicht abschüssige Rollenbahn vom Förderer zu der Entnahmestelle, auf der die geprüften Gegenstände sich selbsttätig zu der Entnahmestelle bewegen oder einfach manuell bewegt werden können.

Zum Transport von kleinen Gegenständen (Geldbörsen, Mobiltelefonen, Laptops, kleine Rucksäcke etc.) und Kleidungstücken, werden bekannterweise Transportwannen verwendet, in die diese Gegenstände gelegt werden. Wie die größeren Gegenstände (Taschen, Trolleys etc.) werden die Transportwannen mit den darin befindlichen Gegenständen an der Auflagefläche aufgelegt, dem Förderer übergeben und von diesem durch das Prüfgerät gefördert. Nach der Kontrolle werden die geprüften und nicht verdächtigen Gegenstände an der Entnahmestelle aus den Wannen von den Passagieren entnommen. Nach dem Entleeren werden die Transportwannen wieder an den Eingang der Prüfanlage zurückgebracht.

Um die Belastung des Bedienungspersonals durch den Rücktransport der Wannen zu vermindern, ist es aus der WO 2007/090450 A1 bekannt, neben oder unterhalb des durch das Prüfgerät führenden Förderers einen Rückförderer für die Transportwannen anzuordnen, der von der Entnahmestelle bis in den Bereich der Auflagestelle reicht. Der Rückförderer ist neben dem durch das Prüfgerät führenden Förderer auf der Operatorseite verlaufend angeordnet. Nach einer weiteren Ausführungsform ist der Rückförderer unter dem Prüfgerät angeordnet. Die Wannen werden auf dem Rückförderer liegend oder hochkantstehend zurückgefördert und werden von einem Passagier von dem Rückförderer auf die Auflagestelle bewegt.

Der Erfindung liegt die Aufgabe zu Grunde, eine Gepäckprüfanlage der gattungsgemäßen Art so zu verbessern, dass die Belastung der Passagiere und des Bedienungspersonals bei der Verwendung von Transportwannen vermindert wird und durch ein intelligentes Wannenausgabesystem die Zeit zur Vorbereitung des Prüfvorgangs für den Passagier reduziert und somit die gesamte Bedieneffizienz gesteigert wird.

Diese Aufgabe wird nach der Erfindung gemäß Anspruch 1 dadurch gelöst, dass der Rückförderer auf der Operatorseite oder unterhalb des Prüfgeräts verlaufend angeordnet ist und zu einem Wannenlift führt, dessen Ausgang zu einer parallel zu der Auflagefläche verlaufenden Wannenübergabestrecke führt, die in Richtung zur Auflagefläche geneigt verläuft.

Die abhängigen Patentansprüche enthalten bevorzugte, da besonders vorteilhafte Ausführungsformen der Erfindung.

Nachfolgend wird ein bevorzugtes Ausführungsbeispiel der Erfindung anhand der Zeichnung näher erläutert.
- Figur 1: zeigt in Schrägansicht eine Gepäckprüfanlage von der Operatorseite her,
- Figur 2: zeigt in vergrößerter Darstellung das Ende der Anlage im Bereich der Entnahmestelle,

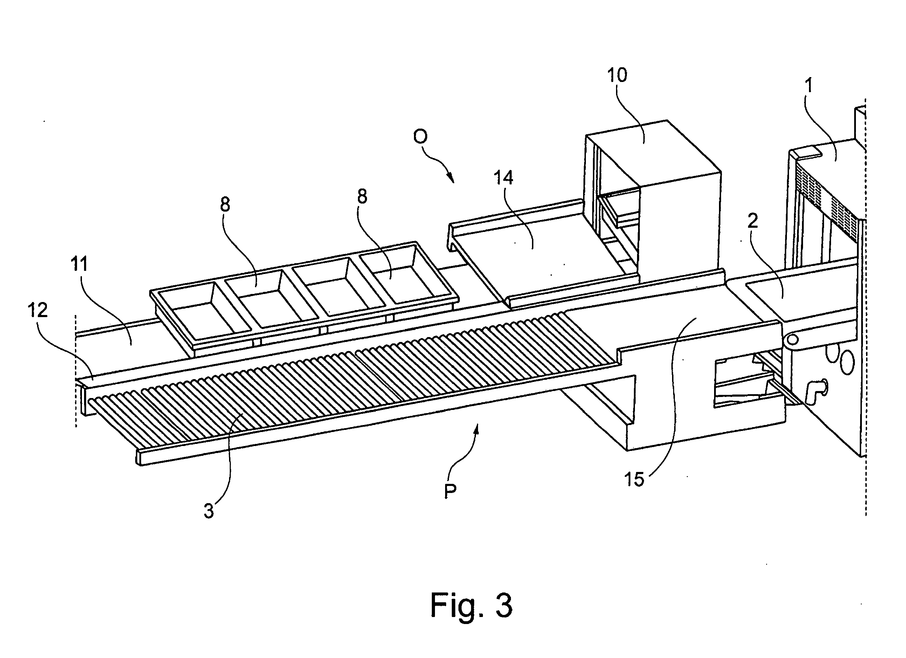

- Figur 3: zeigt in Schrägansicht den Bereich der Auflagefläche ab Anfang der Anlage von der Passagierseite ausgesehen,

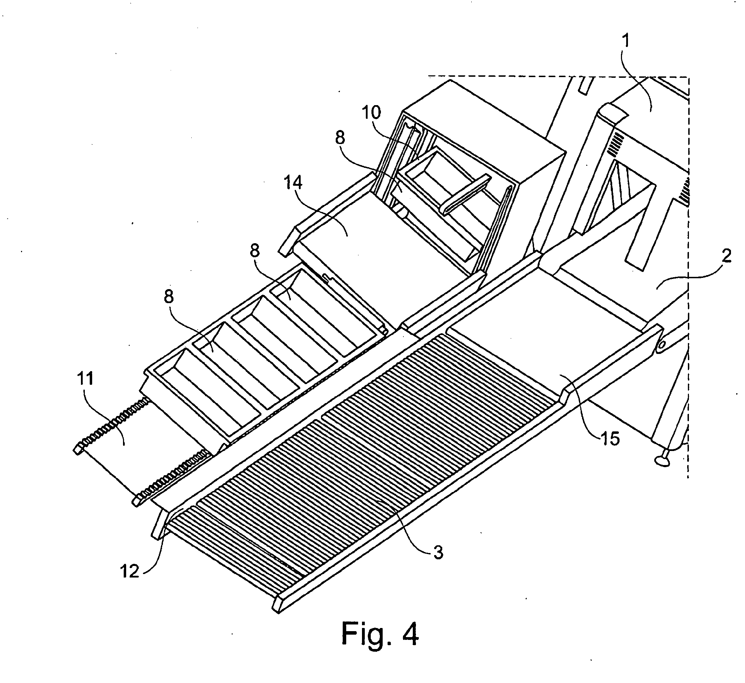

- Figur 4: zeigt den Bereich vor dem Prüfgerät in Schrägansicht,
- Figur 5: zeigt schematisch das Herüberziehen und Auflegen von Transportwannen durch Passagiere.

Die in den Figuren dargestellte Prüfanlage dient zur Überprüfung von Handgepäck und anderen von Personen mitgeführten Gegenständen. Sie wird bevorzugt zur Sicherheitskontrolle auf Flughäfen eingesetzt, um die von Passagieren mitgeführten Gegenstände auf Waffen, Explosivstoffe oder andere unzulässige Gegenstände zu kontrollieren. Die Prüfanlage enthält ein Prüfgerät 1, bevorzugt ein Röntgenprüfgerät, in dem die mitgeführten Gegenstände durchstrahlt werden.

Die zu prüfenden Gegenstände werden auf einem Förderer 2, der sich durch das Prüfgerät 1 erstreckt, durch das Prüfgerät 1 gefördert. Der Förderer 2 ist bevorzugt ein Bandförderer. An der Eingangsseite der Prüfanlage ist an der Passagierseite P vor dem Förderer 2 eine Auflagefläche 3 angeordnet, auf die die zu prüfenden Gegenstände aufgelegt und dem Förderer 2 zugeführt werden. Bevorzugt besteht die Auflagefläche 3 aus einer Rollenstrecke mit frei drehbaren Rollen. Zwischen der Auflagefläche 3 und dem Förderer 2 befindet sich ein angetriebenes Band 15, von dem die Gegenstände von einander separiert werden, damit sie einzeln und mit etwas Abstand voneinander durch das Prüfgerät transportiert werden.

An der Ausgangsseite der Prüfanlage schließt sich an den Förderer 2 eine bevorzugt automatische Ausschleuseeinheit 13 und danach eine Rollenstrecke 4 an, die zu einer Entnahmestelle 5 führt. An der Entnahmestelle 5 entnimmt ein Passagier 6 seine geprüften und für unbedenklich eingestuften Gegenstände.

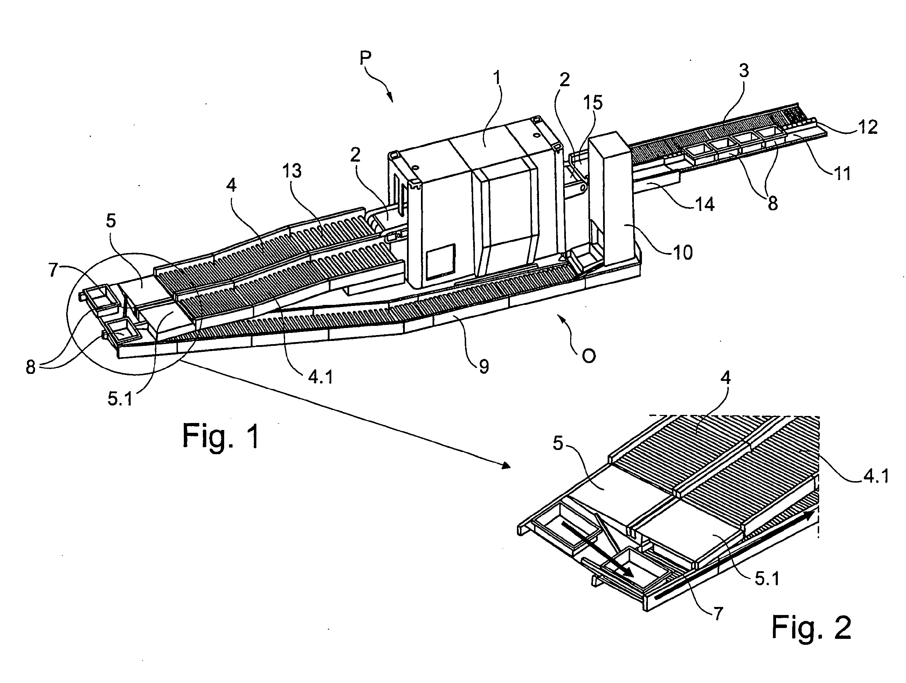

Parallel zur ersten Rollenstrecke 4 ist eine zweite Rollenstrecke 4.1 angeordnet, die zu einer weiteren Entnahmestelle 5.1 führt, die zugleich als Nachkontrollstelle genutzt wird. Mittels der automatisch oder manuell durch den Operator auslösbaren Ausschleuseeinheit 13 können verdächtige Gegenstände der zweiten Rollenstrecke 4.1 zugeführt werden, die sie zu einer weiteren Kontrollstelle fördert. Zum Abschluss folgt eine Wannenaufnahme 7, von der die leeren Transportwannen 8 an einen Wannenrückförderer 9 übergeben werden. Der Bereich des Endes der Prüfanlage mit der Rollenstrecke 4, der Entnahmestelle 5 und der Wannenaufnahme 7 ist in Figur 2 vergrößert dargestellt.

Im bevorzugten Ausführungsbeispiel ist der Wannenrückförderer 9 an der Operatorseite O neben dem Prüfgerätverlaufend angeordnet. Alternativ ist es möglich, den Rückförderer direkt unterhalb des Prüfgeräts 1 verlaufend anzuordnen. Der Rückförderer 9 reicht in Transportrichtung der leeren Wannen 8 bis hinter das Prüfgerät 1. Er ist als Rollenstrecke aufgebaut, wobei die Rollenstrecke etwas unterhalb der Entnahmestelle 5 beginnt und zunächst abschüssig bis in den Bereich des Prüfgeräts 1 verläuft. Im Bereich des Prüfgeräts 1 ist der Rückförderer 9 am Boden geführt, damit die Tätigkeit des Operators möglichst wenig beeinträchtigt wird. Falls für einen störungsfreien Rücktransport der Wannen 8 erforderlich, sind Förderelemente des Rückförderers 9 mit einem Förderantrieb verbunden. Im Beispiel werden die Rollen des Rückförderers 9 an den entsprechenden Stellen angetrieben. Anschließend mündet der Rückförderer 9 in einen Wannenlift 10, von dem die Transportwannen 8 bis in den Bereich etwas oberhalb der Auflagefläche 3 angehoben werden. Dort ist parallel zur Auflagefläche 3 verlaufend eine Wannenübergabestrecke 11 angeordnet, von der die den Wannenlift 10 verlassenden Transportwannen 8 übernommen werden.

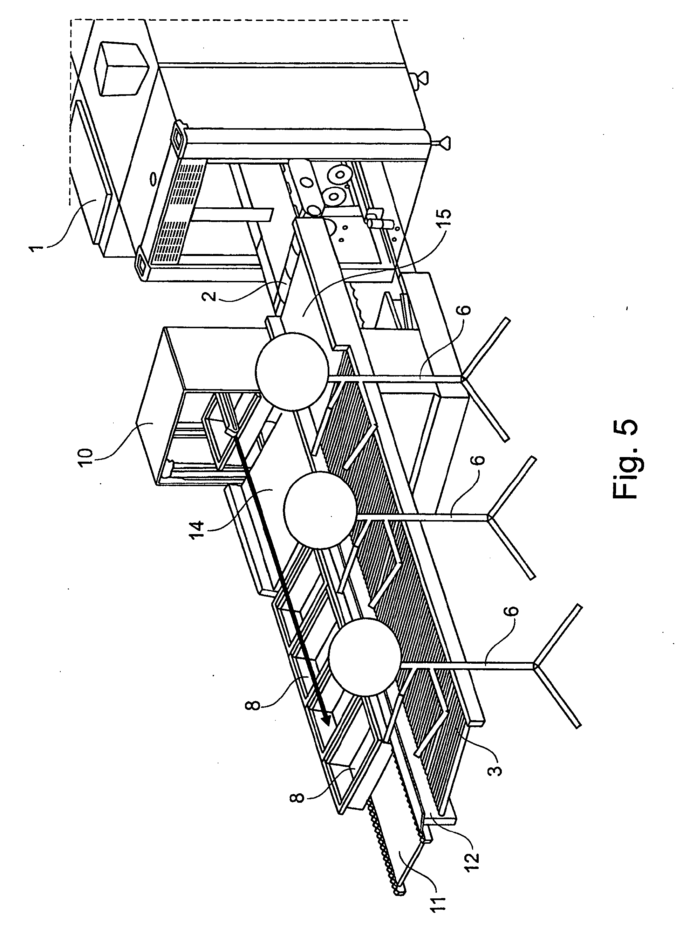

Der Wannenlift 10 enthält einen Schiebemechanismus, von dem die Wannen aus dem Lift 10 auf ein sich anschließendes angetriebenes Förderband 14 geschoben werden. Das Förderband 14 befördert die ankommenden Wannen 8 auf eine weitere Wannenübergabestrecke 11. Die Wannenübergabestrecke 11 hat eine in Richtung zur Auflagefläche 3 geneigte Oberfläche. Sie weist eine Haltekante 12 auf, die aus einer kleinen Leiste mit integrierten freilaufenden Rollen besteht und nur eine geringe Höhe hat, so dass die Transportwannen 8 nur leicht gehalten und einfach von einem Passagier 6 auf die Auflagefläche 3 gezogen werden können, wie in Figur 5 dargestellt ist.

Das in den Figuren dargestellte Transportwannenrückführsystem arbeitet wie folgt:
Am Anfang der Prüfanlage werden die Transportwannen 8 von dem Wannenlift 10 angehoben und mittels des angetriebenen Förderbandes 14 an die Wannenübergabestrecke 11 übergeben, die an der Operatorseite O parallel zur Auflagefläche 3 verläuft. Die Höhen der Übergabestrecke 11 und der Auflagefläche 3 sind so gewählt, dass ein an der Passagierseite P stehender Passagier 6 eine Wanne 8 ohne sich zu bücken oder zu strecken ergreifen und zu sich auf die Auflagefläche 3 ziehen kann. Damit dies ohne körperliche Anstrengungen erfolgen kann, verläuft die Übergabestrecke 11 in Richtung zur Auflagefläche 3 geneigt. Um ein unkontrolliertes Abrutschen von Wannen 8 von der Auflagefläche zu vermeiden, weist diese eine aus einer kleinen Rollenleiste bestehenden Haltekante 12 geringer Höhe auf, die sie von der Auflagefläche 3 trennt.

Das Befüllen einer Transportwanne 8 mit zu prüfenden Gegenständen durch den Passagier 6 erfolgt entweder während sich die Wanne 8 auf der Übergabestrecke 11 befindet. Dann wird die ganz oder teilweise gefüllte Wanne 8 anschließend auf die Auflagefläche 3 geschoben. Alternativ kann ein Passagier 6 eine leere Transportwanne 8 zuerst von der Übergabestrecke 11 auf die Auflagefläche 3 ziehen und sie danach dort befüllen. Die mit zu prüfenden Gegenstände gefüllten Wannen 8 werden dem Förderer 2 übergeben, von dem sie zur Prüfung durch das Prüfgerät 1 transportiert werden. Nach der Prüfung übergibt der Förderer 2 die Transportwannen 8 an die Ausschleuseeinheit 14 und anschließend, je nach Bewertung des Operators ob verdächtig oder unverdächtig, an eine der beiden die Rollenstrecken 4 bzw. 4.1, von der sie - falls unverdächtig - an die erste Entnahmestelle 5 transportiert werden. Dort entnehmen die Passagiere 6 die geprüften Gegenstände aus den Wannen 8. Die leeren Wannen 8 werden anschließend von dem Rückförderer 9 über den Wannenlift 10 wieder zur der Eingangsseite der Prüfanlage zurückgefördert, wo sie auf der Wannenübergabestrecke 11 für die erneute Benutzung bereitgestellt werden.

Bevorzugt wird die zweite Entnahmestelle 5.1 zusätzlich als Nachprüfstelle zu verwenden. Sieht ein Operator die Notwendigkeit, einen Gegenstand für eine genauere Prüfung öffnen zu lassen, so wird der nach dem Röntgenvorgang vom Operator als verdächtig eingestufte Gegenstand durch die automatische Ausschleuseeinheit 14 direkt der zweiten Strecke 4.1 zugeführt. Der Operator veranlasst, dass an der zweiten Entnahmestelle 5.1 eine Nachprüfung stattfindet, bevor der Gegenstand von einem Passagier entnommen werden darf.

## Patentansprüche

1. Anlage zur Prüfung von Handgepäck und anderen von Personen mitgeführten Gegenständen mit
- einem Prüfgerät (1), insbesondere einem Röntgenprüfgerät,
- einem durch das Prüfgerät (1) erstreckenden Förderer (2) zum Fördern der zu prüfenden Gegenstände durch das Prüfgerät (1),
- eine vor dem Förderer (2) angeordneten Auflagefläche (3),
- einer hinter dem Förderer (2) angeordneten Entnahmestelle (5, 5.1) für die Gegenstände,
- mit auf den Förderer (2) aufsetzbaren Transportwannen (8), in die kleine Gegenstände und Kleidungsstücke gelegt und zur Überprüfung durch das Prüfgerät (1) gefördert werden,
- mit einem Rückförderer (9) für die leeren Transportwannen (8) und
- einem Wannenlift (10).
**dadurch gekennzeichnet, dass** der Rückförderer (9) zu dem Wannenlift (10) führt, dessen Ausgang zu einer parallel zu der Auflagefläche (3) verlaufenden Wannenübergabestrecke (11) führt, die in Richtung zur Auflagefläche (3) geneigt verläuft.

2. Prüfanlage nach Anspruch 1, **dadurch gekennzeichnet, dass** die Wannenübergabestrecke (11) an der Seite der Auflagefläche (3) eine Haltekante (12) von geringer Höhe aufweist.

3. Prüfanlage nach Anspruch 1 oder 2, **dadurch gekennzeichnet, dass** die Auflagefläche (3) als Rollenstrecke ausgebildet ist.

4. Prüfanlage nach einem der Ansprüche 1 bis 3, **dadurch gekennzeichnet, dass** zwischen dem Förderer (2) und der Entnahmestelle (5) eine Rollenstrecke (4) angeordnet ist, die abschüssig geneigt zur Entnahmestelle (5) verläuft.

5. Gepäckanlage nach Anspruch 4, **dadurch gekennzeichnet, dass** parallel zur Rollenstrecke (4) eine zweite Rollenstrecke (4.1), bevorzugt mit einer sich anschließenden zweiten Entnahmestelle (5.1), angeordnet ist.

6. Prüfanlage nach Anspruch 5 **gekennzeichnet durch** eine Ausschleuseeinheit (13), die verdächtige Gegenstände der zweiten Rollenstrecke (4.1) zuführt.

7. Prüfanlage nach einem der Ansprüche 1 bis 6 **dadurch gekennzeichnet, dass** der Rückförderer (9) als Rollenstrecke ausgebildet ist.

8. Prüfanlage nach einem der Ansprüche 1 bis 7, **dadurch gekennzeichnet, dass** Förderelemente des Rückförderers (9) mit einem Förderantrieb verbunden sind.

9. Prüfanlage nach einem der Ansprüche 1 bis 8, **dadurch gekennzeichnet, dass** der Rückförderer (9) im Bereich des Prüfgeräts (1) auf dem Boden verlaufend angeordnet ist.

10. Prüfanlage nach einem der Ansprüche 1 bis 9, **dadurch gekennzeichnet, dass** der Rückförderer (9) auf der Operatorseite (O) oder unterhalb des Prüfgeräts (1) verlaufend angeordnet ist.

## Claims

1. System for scanning hand baggage and other articles carried by individuals, comprising
- a scanning device (1), in particular an x-ray scanning device,
- a conveyor (2), extending through the scanning device (1), for conveying the articles to be scanned through the scanning device (1),
- a supporting surface (3) arranged before the conveyor (2),
- a removal point (5, 5.1) for the articles, arranged after the conveyor (2),
- comprising transport trays (8) that can be placed on the conveyor (2), in which small articles and items of clothing are laid and which are conveyed through the scanning device (1) for scanning,
- comprising a return conveyor (9) for the empty transport trays (8), and
- a tray lift (10),
**characterized in that** the return conveyor (9) leads to the tray lift (10), the exit of which leads to a tray transfer section (11) which extends parallel to the supporting surface (3) and which runs at an angle in the direction of the supporting surface (3).

2. Scanning system according to Claim 1, **characterized in that** the tray transfer section (11) at the side of the supporting surface (3) has a retaining edge (10) of low height.

3. Scanning system according to Claim 1 or 2, **characterized in that** the supporting surface (3) is constructed as a roller section.

4. Scanning system according to one of Claims 1 to 3, **characterized in that** between the conveyor (2) and the removal point (5) there is arranged a roller section (4), which runs at an angle sloping down to the removal point (5).

5. Scanning system according to Claim 4, **characterized in that** parallel to the roller section (4) there is arranged a second roller section (4.1), preferably having an adjacent second removal point (5.1).

6. Scanning system according to Claim 5, **characterized by** an expulsion unit (13), which feeds suspicious articles to the second roller section (4.1).

7. Scanning system according to one of Claims 1 to 6, **characterized in that** the return conveyor (9) is constructed as a roller section.

8. Scanning system according to one of Claims 1 to 7, **characterized in that** conveying elements of the return conveyor (9) are connected to a conveyor drive.

9. Scanning system according to one of Claims 1 to 8, **characterized in that** the return conveyor (9) in the area of the scanning device (1) is arranged running on the floor.

10. Scanning system according to one of Claims 1 to 9, **characterized in that** the return conveyor (9) is arranged running on the operator side (0) or underneath the scanning device (1).

## Revendications

1. Installation d'inspection de bagages manuels et d'autres objets emportés par des personnes, l'installation présentant :
un appareil d'inspection (1), en particulier un appareil d'inspection à rayons X,
un transporteur (2) qui s'étend à travers l'appareil d'inspection (1) et qui transporte à travers l'appareil d'inspection (1) les objets à vérifier,
une surface de pose (3) disposée en amont du transporteur (2),
un emplacement (5, 5.1) de reprise des objets disposé en aval du transporteur (2),
un panier de transport (8) qui peut être placé sur le transporteur (2) et dans lequel de petits objets et de petites pièces d'habillement sont placés et sont transportés à travers l'appareil d'inspection (1) pour être inspectés et
un transporteur de renvoi (9) prévu pour les paniers de transport (8) vides et
un ascenseur (10) à paniers,
**caractérisée en ce que**
le transporteur de renvoi (9) conduit à l'ascenseur (10) de paniers dont la sortie conduit à un parcours (11) de transfert de paniers qui s'étend parallèlement à la surface de pose (3) et qui s'étend en inclinaison par rapport à la direction de la surface de pose (3).

2. Installation d'inspection selon la revendication 1, **caractérisée en ce que** le parcours (11) de transfert de paniers présente sur le côté de la surface de pose (3) un bord de maintien (12) de petite hauteur.

3. Installation d'inspection selon les revendications 1 ou 2, **caractérisée en ce que** la surface de pose (3) est configurée comme parcours à rouleaux.

4. Installation d'inspection selon l'une des revendications 1 à 3, **caractérisée en ce qu'**un parcours à rouleaux (4) qui s'étend en pente par rapport à l'emplacement de prélèvement (5) est disposé entre le transporteur (2) et l'emplacement de reprise (5).

5. Installation d'inspection selon la revendication 4, **caractérisée en ce qu'**un deuxième parcours à rouleaux (4.1) qui se raccorde de préférence à un deuxième emplacement de prélèvement (5.1) est disposé parallèlement au parcours à rouleaux (4).

6. Installation d'inspection selon la revendication 5, **caractérisée par** une unité d'expulsion (13) qui conduit les objets douteux vers le deuxième parcours à rouleaux (4.1).

7. Installation d'inspection selon l'une des revendications 1 à 6, **caractérisée en ce que** le transporteur de renvoi (9) est configuré comme parcours à rouleaux.

8. Installation d'inspection selon l'une des revendications 1 à 7, **caractérisée en ce que** des éléments de transport du transporteur de renvoi (9) sont raccordés à un entraînement de transport.

9. Installation d'inspection selon l'une des revendications 1 à 8, **caractérisée en ce que** le transporteur de renvoi (9) est disposé sur le sol au niveau de l'appareil d'inspection (1).

10. Installation d'inspection selon l'une des revendications 1 à 9, **caractérisée en ce que** le transporteur de renvoi (9) est disposé sur le côté opérateur (0) ou de manière à s'étendre en dessous de l'appareil d'inspection (1).
